Europäisches Patentamt

European Patent Office

Office européen des brevets

(11) Veröffentlichungsnummer: **0 221 835**
**A2**

(12)
# EUROPÄISCHE PATENTANMELDUNG

(21) Anmeldenummer: 86730021.2

(22) Anmeldetag: 10.02.86

(51) Int. Cl.⁴: **H 04 M 1/274**

(30) Priorität: 19.03.85 DE 3510289

(43) Veröffentlichungstag der Anmeldung:
13.05.87 Patentblatt 87/20

(84) Benannte Vertragsstaaten:
AT BE CH DE FR GB IT LI LU NL SE

(71) Anmelder. KRONE Aktiengesellschaft
Beeskowdamm 3-11
D-1000 Berlin 37(DE)

(72) Erfinder: Hempel, Wilfried
Schönwalder Strasse 16
D-1000 Berlin 65(DE)

(54) **Fernsprechapparat mit einer Schnittstelle zur Verbindung mit einer externen Verarbeitungsstufe.**

(57) Einen Fernsprechapparat (10) mit einem, mittels einer Tastatur (12) oder dergleichen auslosbaren Wählorgan (11) ist ein zweites Wählorgan (13) zugeordnet, das über einen Microprozessor (14) von einer externen Verarbeitungsstufe (17) aktiviert werden kann. Um ein gleichzeitiges Auslösen der eiden Wählorgane (11,13) zu vermeiden, ist dem Microprozessor (14) eine Vorrangsteuerung (15) zugeordnet.

EP 0 221 835 A2

## Bilingualer Fernsprechapparat

Die Erfindung bezieht sich auf einen bilingualen Fernsprechapparat, gemäß dem Oberbegriff des Anspruches 1.

Der steigende Versorgungsgrad mit Fernsprechanschlüssen führt bei heutigen Fernsprechteilnehmern zu einer permanent ansteigenden Kommunikation über das Telefon. Trotz des ständigen Ausbaus der Telefonnetze nimmt aber aufgrund der ebenso ansteigenden Kommunikationswünsche die Anzahl der erfolgreich zustandegekommenen Gespräche ständig ab. Die Zeit, die der einzelne Fernsprechteilnehmer braucht, bis er die gewünschte Verbindung erhält, steigt in den Hauptverkehrsstunden zu nicht mehr akzeptablen Spitzenwerten.

Um den zeitaufwendigen Wählvorgang zu verkürzen, sind moderne Fernsprechapparate mit Tastenwahlblöcken versehen, denen Wahlwiederholfunktionen im Besetztfall, auf Abruf gespeicherte Kurzwahlnummern und ähnliches mehr zugeordnet sind. In der DE-OS 33 05 535 wird dazu ein Fernsprechapparat beschrieben, der mit einer bidirektionalen Schnittstelle ausgestattet ist und mit dessen Tastenwahlblock zusätzliche, jenseits der Schnittstelle erzeugbare Befehle ausgelöst werden können. Ein solcher Fernsprechapparat ist jedoch nur im Zusammenhang über die Tastatur zu bedienen.

Aus der US-PS 40 86 443 ist ein Telecopierer bekannt, der mittels einer Abtasteinrichtung Wählinformationen abtastet, die zum Aussenden der Wählinformationen über ein Kabel zu einer automatischen Wähleinrichtung gelangen.

Diese Anordnung dient dazu, beim Abtasten der Telekopie gleichzeitig die auf einer Adresskarte gespeicherte Telefaxnummer abzutasten, um den Empfänger zum Aussenden der Telekopie automatisch über die Wähleinrichtung anzuwählen Die Abtasteinrichtung hat den Vorteil, daß der Empfänger nicht manuell angewählt werden muß. Es besteht jedoch keine Möglichkeit, eine Gesprächsverbindung von einer externen Verarbeitungsstufe aufzubauen.

Aufgabe der Erfindung ist es, einen Fernsprechapparat der eingangs beschriebenen Art so auszugestalten, daß er auch von einer externen Verarbeitungsstufe aus mit seinen unterschiedlichsten Funktionen bedient werden kann.

Die Lösung dieser Aufgabe ergibt sich aus den kennzeichnenden Merkmalen des Anspruches 1. Durch diese Maßnahmen wird ein Fernsprechapparat geschaffen dessen, die Verbindung aufbauende Funktionen sowohl mit Hilfe der Tastatur als auch mit der externen Verarbeitungsstufe aktiviert werden können. Der Fernsprechteilnehmer braucht so seinen Arbeitzplatz an der externen Verarbeitungsstufe, z.B. einen Personalcomputer, den Terminal eines Großrechners usw. nicht zu verlassen, wenn er bei seiner dortigen Tätigkeit eine Fernsprechverbindung benötigt.
Die externe Verarbeitungstufe betätigt das zweite Wählorgan selbsttätig und zeigt an, wenn die gewünschte Verbindung zustandegekommen ist.

In der Zwischenzeit kann der die Verbindung suchende
Fernsprechteilnehmer seiner sonstigen Tätigkeit weiter
nachgehen. So können beispielsweise periodisch wiederkehrende Ferngespräche vermerkt werden, die die externe
Verarbeitungsstufe zu bestimmten Zeiten herzustellen
versucht.
Kommt dabei keine Verbindung zustande, so wird dieser
Teilnehmer wieder in eine bestimmt Rangliste eingegeben,
um zu einem anderen, vorbestimmten Zeitpunkt erneut angewählt zu werden.

Auch ist es möglich, in der externen Verarbeitungsstufe
gespeicherte Rufnummern oder sonstige Funktionen direkt
aufzurufen. Unabhängig davon kann der Fernsprechapparat
aber auch direkt über seine Tastatur betätigt werden.
Damit sich diese beiden Betätigungsarten nichtt gegenseitig beeinträchtigen, ist die Vorrangsteuerung vorgesehen,
die das jeweils nicht betätigte Wählorgan blockiert.

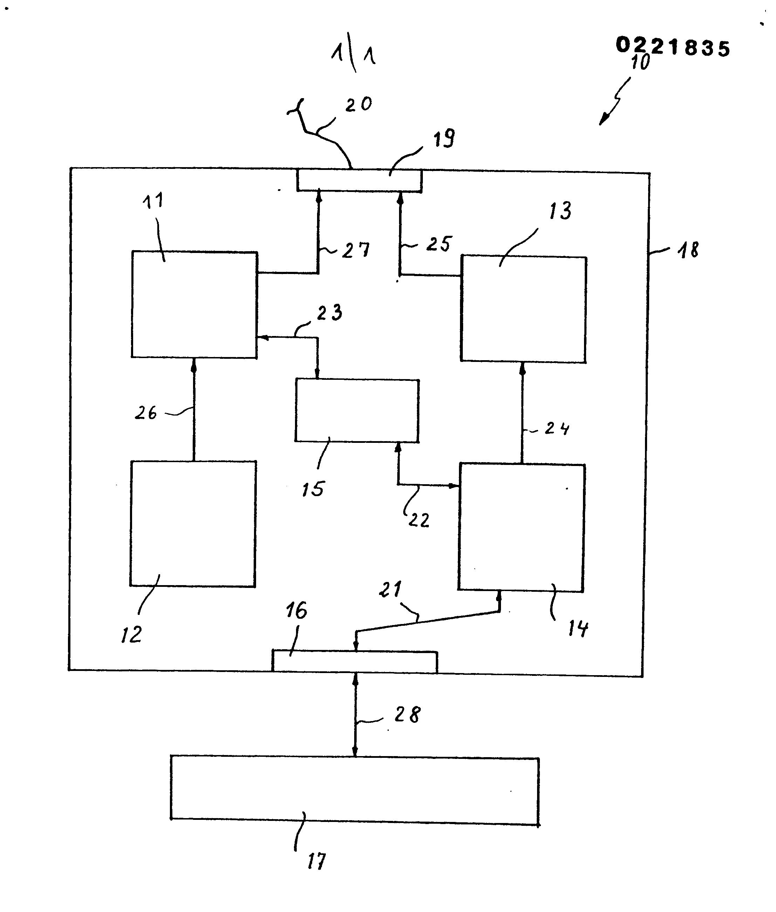

Weitere vorteilhafte Maßnahmen sind in den Unteransprüchen beschrieben. So wird durch die Anordnung eines
zweiten Wählorgans eine Trennung von zwei Leitungswegen
erreicht, die nur über die Vorrangsteuerung miteinander
verbunden sind, so daß die Tastatur und das erste Wählorgan in bekannter Weise aus der "Amtsschleife" gespeist
werden und die für das zweite Wählorgan und den Microprozessor notwendige Energie dem Stromnetz entnommen wird.
Die Erfindung ist in der beiliegenden Zeichnung dargestellt und wird nachfolgend näher beschrieben.

Der Fernsprechapparat 10 besteht im wesentlichen aus
einem Gehäuse 18, in dem ein erstes Wählorgan 11 und ein
zweites Wählorgan 13 angeordnet sind. Das erste Wählorgan 11 ist über die erste Ausgangsleitung 27 mit der Anschlußklemme 19 verbunden, an die die Teilnehmeranschlußleitung 20 angeschlossen ist. Das erste Wählorgan 11 ist
in herkömmlicher Art mittels einer Tastatur 12 über die
erste Befehlsleitung 26 auslösbar. Das zweite Wählorgan
13 ist über die zweite Ausgangsleitung 25 mit der Anschlußklemme 19 verbunden und ist über die zweite Befehlsleitung 24 einem Microprozessor 14, z.B. einem
Single-Chip-Microcomputer zugeordnet.

Der Microprozessor 14 ist über die Eingangsleitung 21
mit einer Schnittstelle 16, z.B. eine V 24-Schnittstelle, und über diese und die Arbeitsleitung 28 mit
einer externen Verarbeitungsstufe 17 verbunden, von der
er zum Auslösen des zweiten Wählorgans 13 betätigt
werden kann. Um die
gleichzeitige Auslösung der beiden Wählorgane 11 und 13
zu vermeiden, ist zwischen dem ersten Wählorgan 11 und
dem Mikroprozessor 14 eine Vorrangsteuerung 15 geschaltet, wobei das erste Wählorgan 11 über die Rückfrageleitung 23 und der Mikroprozessor 14 über die Steuerleitung 22 mit der Vorrangsteuerung 15 verbunden ist.
Diese Vorrangsteuerung 15 blockiert beispielsweise das
erste Wählorgan 11, wenn das zweite Wählorgan 13
bereits vorher betätigt worden ist und umgekehrt.

Bei Eingang eines entsprechenden Wählbefehls, der von der
externen Verarbeitungsstufe 17 über eine Arbeitsleitung
28 zu der Schnittstelle 16 und von dort weiter über eine
Eingangsleitung 21 zum Microprozessor 14 kommt, fragt
dieser über eine Steuerleitung 22 die Vorrangsteuerung
15 ab. Die Vorrangsteuerung 15 ist dazu über eine Rückfrageleitung 23 mit dem ersten Wählorgan 11 verbunden.

Das erste Wählorgan 11 ist über eine erste Befehlsleitung 26 mit der Tastatur 12 verbunden, mit der es zur Herstellung einer Fernsprechverbindung ausgelöst werden kann. Wird das erste Wählorgan 11 auf diese Weise ausgelöst, so kommt über eine erste Ausgangsleitung 27 eine Verbindung zu einer Anschlußklemme 19 und von dort weiter zur Teilnehmeranschlußleitung 20 zustande. Ist der Teilnehmer besetzt, so muß neu gewählt werden.

Die Vorrangsteuerung 15 fragt bei einem Rückfrageauftrag durch den Microprozessor 14 das erste Wählorgan 11 ab, ob dort bereits eine Verbindung von der Tastatur 12 ausgelöst ist. Das Abfrageergebnis gelangt über die Rückfrageleitung 23 und die Steuerleitung 22 zurück zum Microprozessor 14.

Meldet die Vorrangsteuerung 15, daß die Teilnehmeranschlußleitung 20 bereits von dem ersten Wählorgan 11 besetzt ist, so wiederholt der Microprozessor 14 diese Anfrage solange, bis er eine Freimeldung erhält. Hat er eine Freimeldung erhalten, so blockiert er über die Vorrangsteuerung 15 das erste Wählorgan 11 und löst über eine zweite Befehlsleitung 24 das zweite Wählorgan 13 aus. Das zweite Wählorgan 13 stellt nun seinerseits über eine zweite Ausgangsleitung 25 die Verbindung zur Teilnehmeranschlußleitung 20 und zum Teilnehmer her. Die erste und die zweite Ausgangsleitung können über ein entsprechendes Relais auch zusammengeschaltet sein.

Kommt die Verbindung zustande, so meldet dies der Microprozessor 14 der externen Verarbeitungsstufe 17 und es
wird ein entsprechendes Signal ausgelöst; der Anschlußsuchende kann das gewünschte Gespräch aufnehmen. Ist der
gewünschte Teilnehmer besetzt, so wiederholt der Microprozessor 14 den Verbindungswunsch entweder solange, bis
die gewünschte Verbindung hergestellt ist, oder die Verarbeitungsstufe 17 reiht diesen negativen Verbindungswunsch für einen erneuten Verbindungsversuch zu einem
späteren Zeitpunkt ein.

0221835

KRONE G m b H
1000 Berlin 37

28.01.1986

Ansprüche:

1. Bilingualer Fernsprechapparat mit einem schleifengespeisten, von einer Tastatur oder dergleichen auslösbaren
Wählorgan zum Anwählen eines Fernsprechteilnehmers und
mit einer Schnittstelle zur Verbindung mit einer externen
Verarbeitungsstufe,
gekennzeichnet durch ein im Gehäuse (18) des Fernsprechapparates (10) angeordnetes zweites Wählorgan (13), das
mit der Schnittstelle (16) über einen Microprozessor (14)
verbunden ist und das über die Schnittstelle (16) von der
externen Verarbeitungsstufe (17) ansteuerbar ist, und
durch eine zwischen dem ersten Wählorgang (11) und dem
Microprozessor (14) geschaltete Vorrangsteuerung (15)
zum alternativen Auslösen eines der beiden Wählorgane
(11,13).

2. Fernsprechapparat nach Anspruch 1,
dadurch gekennzeichnet, daß das zweite Wählorgang (13)
und/oder der Microprozessor (14) netzgespeist ist.

3. Fernsprechapparat nach den Ansprüchen 1 und 2, dadurch
gekennzeichnet, daß der Microprozessor (14) ein
Single-Chip-Microcomputer ist.

-2-